# EUROPÄISCHE PATENTSCHRIFT

(11) **EP 1 656 057 B1**
(45) Veröffentlichungstag und Bekanntmachung des Hinweises auf die Patenterteilung: **02.07.2008**
(21) Anmeldenummer: 04763297.1
(22) Anmeldetag: 16.07.2004
(51) Int. Cl.: A47J 19/02

(54) **SAFTPRESSE MIT SPALTEINSTELLUNG**
JUICER FEATURING GAP ADJUSTMENT
PRESSE-FRUITS AVEC REGLAGE DE LA SECTION DE PASSAGE

(30) Priorität: 11.08.2003 DE 10336826
(43) Veröffentlichungstag der Anmeldung: 17.05.2006
(73) Patentinhaber: BSH Bosch und Siemens Hausgeräte GmbH, 81739 München (DE)
(72) Erfinder: PAVLOVIC, Henrik, Ljubno ob Savin 3333 (SI); ZIBRET, Igor, 3327 Smartno ob Paki (SI); BREZOVNIK, Peter, 3330 Mozirje (SI)
(86) Internationale Anmeldenummer: PCT/EP2004/007969
(87) Internationale Veröffentlichungsnummer: WO 2005/016089

(56) Entgegenhaltungen:
- EP-A- 0 423 457
- US-A- 6 138 556

## Beschreibung

Die Erfindung betrifft eine Saftpresse gemäß dem Oberbegriff des Anspruchs 1.

Aus EP 423 457 B1 ist eine elektrisch angetriebene Zitruspresse bekannt, bei der ein Presskegel durch eine Antriebswelle motorisch angetrieben ist. Der Presskegel ist rundum von einem mit Durchlässen versehenen Sieb umgeben. Zwischen Presskegel und Sieb ist ein Ringspalt ausgebildet. Ober den Umfang des Siebes können gleichmäßig verteilte Ausnehmungen vorgesehen sein, die beispielsweise an Vorsprüngen des Presskegels einrastbar sind. Der Ringspalt ist in seinem Querschnitt veränderbar. Zum Zwecke der Querschnittsveränderung ist der Presskegel gegen das Sieb höhenverstellbar. Dabei verändert sich die Lage einer Mantelfläche des Presskegels gegenüber dem Sieb im Bereich des Ringspaltes. Nachteilig ist jedoch, dass die Querschnittsveränderung nur in einem geringen Querschnittsspektrum veränderbar ist, da der Presskegel aus konstruktiven Gründen nicht beliebig in seiner Höhe verstellbar sein kann. Insbesondere weist auch der um den Presskegel umlaufende Ringspalt nur eine vergleichsweise geringe Querschnittsfläche auf.

Aus US 6,138,556 ist eine Saftpresse insbesondere zum Entsaften von Zitrusfrüchten bekannt, die einen um seine Kegelachse drehbaren Presskegel und einen oberhalb eines Auffangbehälters für ausgepressten Saft angeordneten, dem Presskegel zugeordneten Siebkörper trägt, der einen saftdurchlässigen Bereich mit veränderlichem Durchlassquerschnitt aufweist, wobei der Siebkörper eine mit ersten Durchlassöffnungen versehene erste Siebfläche aufweist, die gegenüber einer mit zweiten Durchlassöffnungen versehenen zweiten Siebfläche lageveränderlich angeordnet ist und der Durchlassquerschnitt des Siebkörpers durch Änderung der gegenseitigen Lage von erster und zweiter Siebfläche veränderlich ist.

Aufgabe der Erfindung ist es, die Positionierung der ersten Siebfläche gegenüber der zweiten Siebfläche zu verbessern. Insbesondere soll verhindert werden, daß eine vom Benutzer einmal gewählte Einstellung sich unbeabsichtigt verstellt.

Diese Aufgabe wird erfindungsgemäß dadurch gelöst, dass zur Begrenzung der Anzahl von möglichen relativen Rastpositionen von erster und zweiter Siebfläche, an der ersten Siebfläche ein Rastmittel vorgesehen ist, das in ein Gegenrastmittel an der zweiten Siebfläche eingreift.

Dabei kann die eine Siebfläche Durchtrittsöffnungen aufweisen, die der maximalen Durchtrittsfläche für die Saftpresse entsprechen soll. Vorzugsweise unterhalb dieser Siebfläche kann eine weitere Fläche vorgesehen sein, die derart ausgebildet ist, dass durch Lageveränderung dieser weiteren Fläche die Durchtrittsöffnungen der einen Siebfläche geöffnet bzw. geschlossen werden können, insbesondere durch Verdecken der Durchtrittsöffnungen des ersten Siebes. In einer vorteilhaften Variante sind in der zweiten Siebfläche gleichgroße, gleichgeformte und gleichangeordnete Durchtrittsöffnungen wie in der ersten Siebfläche angeordnet.

In einer bevorzugten Ausgestaltung der Erfindung ist die erste Siebfläche gegenüber der zweiten Siebfläche verdrehbar, insbesondere um die Kegelachse des Presskegels verdrehbar gelagert. Bevorzug sind die in den beiden Siebfläche angeordneten Durchtrittsöffnungen als sich sternförmig radial erstreckende Schlitze in der Siebfläche ausgebildet. Wenn die beiden Siebflächen gegeneinander verdrehbar gelagert sind, so kann die Sieböffnungsweite durch Verdrehen der beiden Siebe um einen sehr kleinen winkel von einer völlig geschlossenen Stellung in eine Stellung mit maximalem Öffnungsquerschnitt gedreht werden. Dazu ist die erste Siebfläche mittels eines Drehlagers an der zweiten Siebfläche gelagert. Vorzugsweise weist das Drehlager einen an der ersten Siebfläche vorgesehenen Ringbund auf, der an einem zylindrischen, an der zweiten Siebfläche vorgesehenen Tragzapfen gehalten. So kann die erste Siebfläche durch einfaches axiales Aufstecken auf die zweite Siebfläche an diesem montiert werden.

Der Tragzapfen kann zur axialen Sicherung der ersten Siebfläche an der zweiten Siebfläche mindestens einen radialen Vorsprung aufweisen. Nachdem die erste Siebfläche durch einfaches axiales Aufstecken auf die zweite Siebfläche an diesem montiert ist, ist eine gesonderte axiale Sicherung der ersten Siebfläche an der zweiten Siebfläche nicht mehr nötig. Die erste Siebfläche schnappt mittels ihres Ringbundes hinter dem radialen Vorsprung auf den Tragzapfen der zweiten Siebfläche auf und ist dort unmittelbar axial fixiert drehbar gelagert. Ein gesonderter Montageschritt zum axialen Fixieren der ersten Siebfläche an der zweiten Siebfläche kann entfallen, wodurch die Saftpresse insgesamt kostengünstig hergestellt werden kann.

In einer vorteilhaften Ausgestaltung weist die zweite Siebfläche mindestens ein Anschlagelement auf, das zur Begrenzung der Änderung der gegenseitigen Lage von erster und zweiter Siebfläche zwischen zwei an der ersten Siebfläche vorgesehenen Gegenanschlagelementen beweglich ist. Für den Benutzer wird dadurch eine Grenze vorgegeben innerhalb der die erste Siebfläche gegenüber der zweiten Siebfläche verstellt werden, insbesondere um einen maximalen Winkel gedreht werden kann.

Zur Begrenzung der Anzahl von möglichen relativen Rastpositionen von erster und zweiter Siebfläche kann an der ersten Siebfläche ein Rastmittel vorgesehen ist, das in ein Gegenrastmittel an der zweiten Siebfläche eingreift. So wird dem Benutzer eine exakte Positionierung für eine diskrete Anzahl von möglichen Siebeinstellungen vorgegeben. Des weiteren ist verhindert, dass eine einmal gewählte Einstellung sich unbeabsichtigt verstellt.

Die Rastmittel- /Gegenrastmittel-Verbindung können durch einen in ein Zahnprofil eingreifenden Rastzahn gebildet werden. Zahnprofil und Rastzahn können insbesondere an der jeweiligen Siebfläche im Kunststoffspritzgussverfahren einstückig angeformt sein. Zahnprofil und rastzahn können auch entgegen der im Ausführungsbeispiel gezeigten Variante an den Siebflächen vertauscht angeordnet sein.

Vorteilhafter Weise kann die erste Siebfläche einen Griffabschnitt zur Änderung ihrer Lage gegenüber der zweiten Siebfläche aufweisen. Der Griffabschnitt kann eine Seitenwand aufweisen, die sich an einem Rand des Auffangbehälters abstützt. Der Griffabschnitt weist vorzugsweise eine Betätigungsfläche auf, die zur Erhöhung der Rutschfestigkeit eine Oberflächenstruktur aufweist. Der Griffabschnitt kann insbesondere eine optische und/oder haptische Drehrichtungsmarkierung aufweisen. Dazu sind auf der Betätigungsfläche beispielsweise drei unterschiedlich große linsenartige Erhebungen angeformt. Die unterschiedlichen Durchmesser und/oder Höhen der Erhebungen sind ein Maß für die Drehrichtung in der sich der Öffnungsquerschnitt der Siebflächen vergrößert bzw. verkleinert. Wird die erste Siebfläche mittels des Griffabschnitts in Richtung der größten linsenartige Erhebungen gedreht, so wird der Öffnungsquerschnitt der Siebflächen vergrößert. Wird die erste Siebfläche mittels des Griffabschnitts in Richtung der kleinsten linsenartige Erhebungen gedreht, so wird der Öffnungsquerschnitt der Siebflächen verkleinert. Die linsenartigen Erhebungen sind nicht nur optisch zu erkennen, sondern können dadurch, dass sie aus der Ebene der Betätigungsfläche vorzugsweise unterschiedlich hoch bzw. in unterschiedlichem Durchmesser herausragen auch ohne Hinsehen ertastet werden.

Eine bevorzugte Ausgestaltung der Erfindung ist im folgenden anhand der Figuren 1 bis 11 näher erläutert.

Es zeigen:
- Figur 1: einen Querschnitt durch eine erfindungsgemäße Saftpresse;
- Figur 2: eine Schnittdarstellung durch ein oberes Sieb mit einem aufgesetzten Presskegel in Seitenansicht;
- Figur 3: eine perspektivische Ansicht des oberen Siebes gemäß Figur 2 mit dem aufgesetzten Presskegel im Teilschnitt;
- Figur 4: eine Schnittdarstellung durch das obere Sieb und den Presskegel gemäß Figur 2;
- Figur 5: eine perspektivische Ansicht des Presskegels gemäß Figur 2 von unten;
- Figur 6: eine perspektivische Ansicht des oberen Siebes gemäß Figur 2 mit einem angesetzten unteren Sieb;
- Figur 7: eine perspektivische Ansicht des oberen Siebes gemäß Figur 2 von unten;
- Figur 8: eine perspektivische Ansicht des unteren Siebes gemäß Figur 6 von oben;
- Figur 9: eine perspektivische Ansicht der Saftpresse gemäß Figur 1;
- Figur 10: eine perspektivische Teilansicht eines Griffes an der Saftpresse gemäß Figur 9;
- Figur 11: eine perspektivische Teilansicht einer Ringnut mit Rastnase an der Saftpresse gemäß Figur 9;

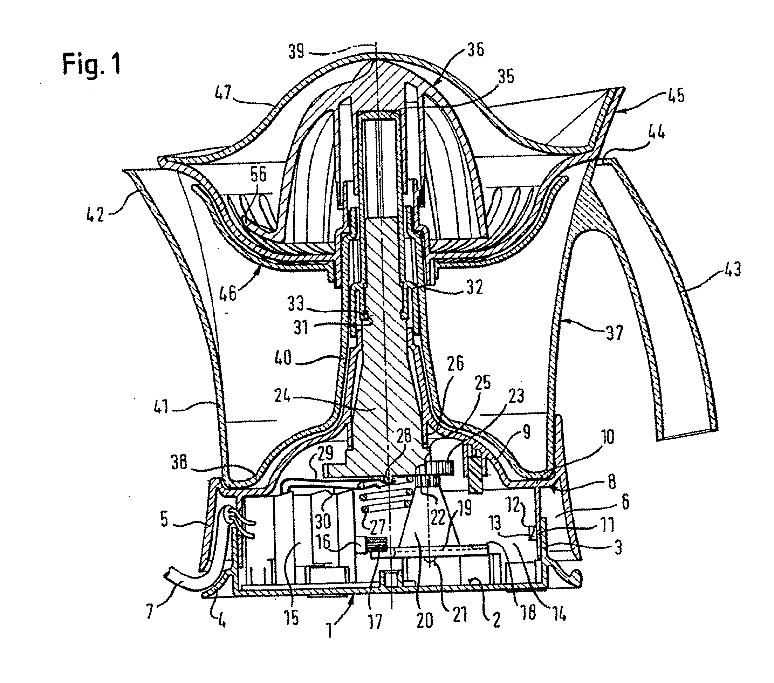

Die in Figur 1 im Schnitt dargestellte Saftpresse weist einen becherförmigen Gehäuseboden 1 mit einer kreisscheibenförmigen Bodenfläche 2 und einer um den Rand der Bodenfläche 2 umlaufenden zylindrischen Seitenwand 3 auf. An der Seitenwand 3 ist ein rinnenförmiger, um den Gehäuseboden 1 umlaufender, radial von der Seitenwand nach außen gerichteter, im Querschnitt bogenförmiger Tragrand 4 angeformt. Der Tragrand 4 begrenzt zusammen mit einer Schürze 5 eine Ringnut 6 zur Aufnahme eines elektrischen Anschlusskabels 7. Die Schürze 5 wird durch einen an einer domförmigen Abdeckung 8 angeformten Wandabschnitt gebildet. Die Abdeckung 8 weist eine kuppelartige Dachfläche 9 auf, an deren horizontal verlaufenden Randabschnitt 10 sich der die Schürze 5 bildende Wandabschnitt anschließt. Dieser Wandabschnitt ist im wesentlichen vertikal verlaufend angeordnet und weist eine leicht kegelig ausgebildete Mantelfläche auf. Unterhalb des kreisringförmigen Randabschnitts 10 erstreckt sich senkrecht nach unten eine zur umlaufenden zylindrischen Seitenwand 3 korrespondierende umlaufende zylindrische Seitenwand 11. Die Seitenwände 3 und 11 sind koaxial zueinander ausgerichtet und überlappen in ihren Randbereichen. An der Seitenwand 11 sind eine Vielzahl von über den Umfang gleichmäßig verteilter Aussparungen 12 vorgesehen, in die zugeordnete, radial nach innen gerichtete Rastzapfen 13 an der Seitenwand 3 des Gehäusebodens 1 eingreifen. Aufgrund der Ausparungen 12 und den eingreifenden Rastzapfen 13 können Gehäuseboden 1 und Abdeckung 8 ohne Verwendung zusätzlicher gesonderter Verbindungsmittel verbunden werden. Gehäuseboden 1 und Abdeckung 8 begrenzen einen Hohlraum 14 zur Aufnahme eines Antriebs.

Der Antrieb umfasst einen an das Anschlußkabel 7 elektrisch kontaktierten Motor 15, der eine Motorwelle 16 aufweist, an der ein Abtriebsritzel 17 sitzt. Das Motorwellenritzel 17 kämmt mit einem axialen Antriebszahnprofil 18, welches auf einem Tellerrad 19 sitzt. Das Tellerrad 19 ist einstückig mit einer kegelstumpfförmigen Getriebewelle 20 ausgebildet. Die Getriebewelle 20 sitzt mit seinem einen axialen Ende auf einem an der Bodenfläche 2 des Gehäusebodens 1 angeformten Nadelsitz 21 drehbar auf. An dem axial gegenüberliegenden anderen Ende der Getriebewelle 20 ist ein Abtriebsritzel 22 angeformt. Das Abtriebsritzel 22 kämmt stirnseitig mit einer Stirnverzahnung 23, die an einem unteren Ende einer Werkzeugwelle 24 vorgesehen ist.

Die Werkzeugwelle 24 weist einen radialen Absatz 25 auf, der in axialer Richtung an einen an der Abdeckung 8 angeformten Ringbund 26 mittels einer Federwendel 27 axial vorgespannt axial verschieblich gelagert ist. Die Federwendel 27 stütz sich einerseits an der Bodenfläche 2 des Gehäusebodens 1 und andererseits an der unteren Stirnseite der Werkzeugwelle 24 ab. Mittels der Federwendel 27 ist die Werkzeugwelle 24 in axialer Richtung nach oben vorgespannt. Wird die Werkzeugwelle 24 in axialer Richtung nach unten gedrückt, so drückt eine an der unteren Stirnseite der Werkzeugwelle 24 angeformte Schaltnase 28 auf eine obere Schaltzunge 29. Wenn die obere Schaltzunge 29 elektrisch mit einer unteren Schaltzunge 30 kontaktiert, wird die Stromzufuhr vom Anschlußkabel 7 zum Motor 15 geschlossen. Wird der axial nach unten gerichtete Druck von der Werkzeugwelle 24 wieder weggenommen, so kehrt die Werkzeugwelle aufgrund der gespannten Federwendel 27 wieder in ihre Ausgangslage, in welcher der Absatz 25 an dem Ringbund 26 ansteht zurück, so federt die obere Schaltzunge 29 wieder in ihre Ursprungslage zurück und die Verbindung zu der unteren Schaltzunge 30 ist aufgehoben und die Stromzufuhr von dem Anschlußkabel 7 zu dem Motor 15 unterbrochen. In einer mittleren Höhe weist die Werkzeugwelle 24 eine Radialnut 31 auf, an der ein Kupplungszapfen 32 aufschnappbar ist. Der Kupplungszapfen weist dazu mehrere über den Umfang gleichmäßig verteilter, radial nach innen gerichtete Schnappnasen 33 auf, die in die Radialnut 31 eingreifen. Zur Abdichtung eines Spaltes zwischen Werkzeugwelle 24 und Kupplungszapfen 32 ist eine mantelartig um den Spalt verlaufende Spritzschutzwand 34 am Kupplungszapfen 32 angeformt. An einem oberen freien Ende weist der Kupplungszapfen 32 ein Sechskantprofil 35 auf, auf den ein Presskegel 36 drehfest aber axial abziehbar aufgesteckt ist.

Um die Werkzeugwelle 24 herum ist ein topfförmiger Auffangbehälter 37 angeordnet. Der Auffangbehälter 37 weist einen der Dachfläche 9 der Abdeckung 8 angepassten Behälterboden 38 auf. Zentral aus dem Behälterboden 38 erstreckt sich koaxial zu einer Achse 39 der Werkzeugwelle 24 eine rohrförmige Behälterhülse 40, die in einer eingesetzten Position des Auffangbehälters 37 von der Werkzeugwelle 24 bzw. von dem Kupplungszapfen 32 durchdrungen wird. An einem äußeren Randabschnitt des Behälterbodens 38 schließt sich eine über den Umfang verlaufende, sich nach oben erstreckende Behälterwand 41 an. An der Behälterwand 41 ist eine Ausgießschnaupe 42 für ausgepressten Saft angeformt. An einer der Ausgießschnaupe 42 gegenüberliegenden Seite der Behälterwand 41 ist ein hohler, nach unten hin offen ausgebildeter Griff 43 angeformt. Der Griff 43 erstreckt sich von einem oberen Rand 44 des Auffangbehälters 37 bogenförmig nach unten bis kurz vor das untere Ende des Auffangbehälters 37.

Auf den oberen Rand 44 ist ein oberer Siebkörper 45 auf den Auffangbehälter 37 aufgesetzt. Unterhalb des Siebkörpers 45 ist ein unterer Siebkörper 46 gelagert. Oberhalb der Siebkörper 45 und 46 ist der Presskegel 36 drehfest auf das Sechskantprofil 35 des Kupplungszapfens 32 aufgesetzt. Den oberen Abschluß der Saftpresse bildet ein Deckel 47, der auf dem oberen Siebköper 45 aufliegt und den Presskegel 36 vollständig verdeckt. Der Deckel 47 ist zur Anpassung an die Kontur des Presskegels 36 leicht nach außen gewölbt geformt. Der Presskegel 36, der oberer Siebkörper 45, sowie der untere Siebkörper 46 sind in den folgenden Figuren näher erläutert.

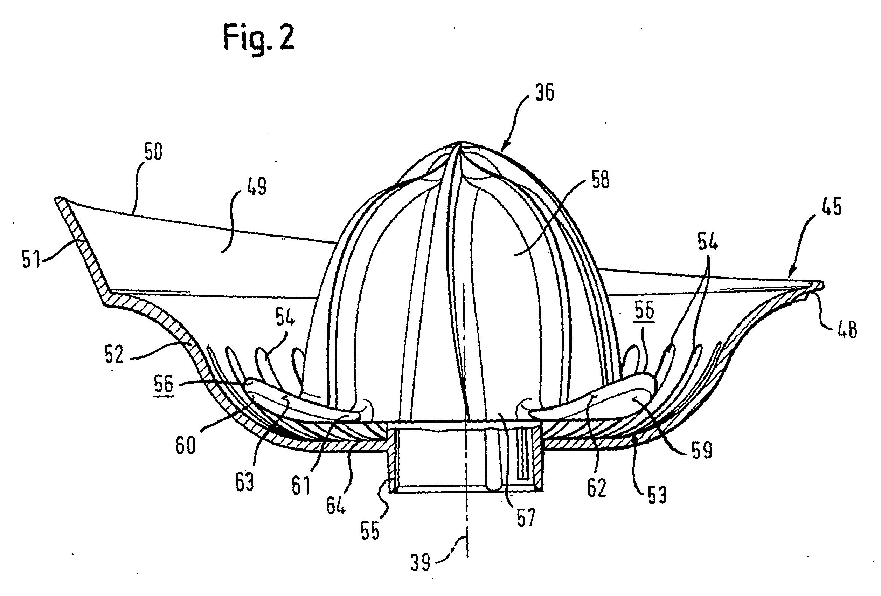

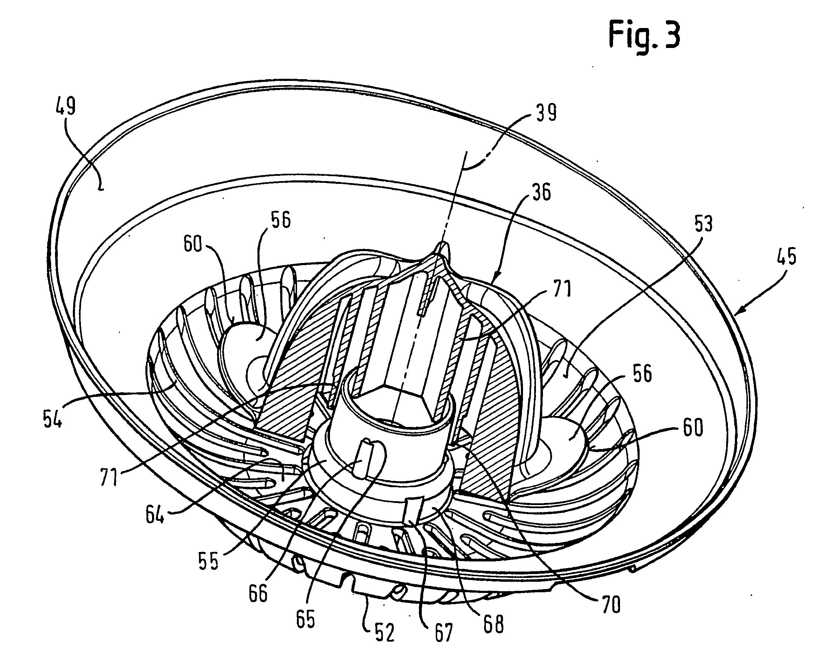

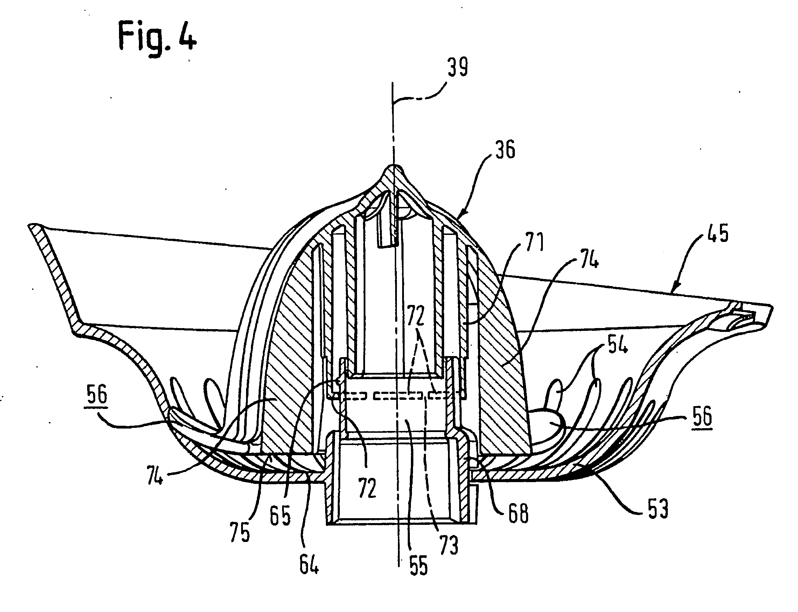

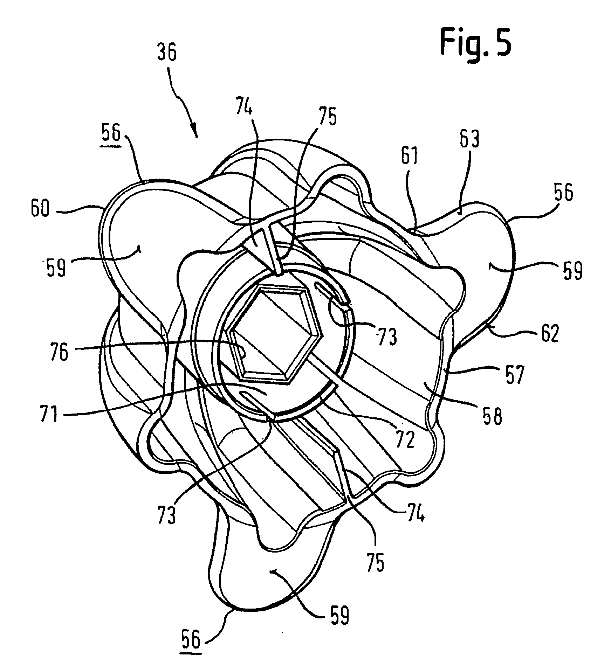

In Figur 2 ist der obere Siebkörper 45 geschnitten dargestellt und der Presskegel 36 in Seitenansicht gezeigt. Der Siebkörper 45 weist eine schüsselartige Form auf. Oberhalb eines kreisringförmigen Schüsselrandes 48 ist eine kegelförmig sich nach oben öffnende Mantelwand 49 angeformt. Ein oberer Rand 50 der Mantelwand 49 ist gegenüber der horizontalen schräg gekippt verlaufend ausgebildet, so dass die Mantelwand 49 in Figur 2 rechts dargestellt ihre geringste Höhe und in Figur 2 links dargestellt ihre größte Höhe aufweist. Der Bereich der Mantelwand 49 mit der größten Höhe bildet dabei einen Griffbereich 51, mit dem der obere Siebkörper 45 gegriffen werden kann. Eine Siebbodenfläche 52 schließt sich unterhalb des Schüsselrandes 48 an. Die Siebbodenfläche 52 ist schalenartig nach unten gewölbt. In der Siebbodenfläche 52 ist eine Siebfläche 53 ausgebildet. Die Siebfläche 53 wird durch eine Vielzahl von radial verlaufenden Schlitzen 54 gebildet. Die Schlitze 54 erstrecken sich radial von einer innerhalb des von der Grundrissfläche des Presskegels 36 überdeckten Siebfläche 53 ausgehend, nach außen hin entlang eines um einen Radius gekrümmten Flächenbereichs der Siebbodenfläche 52 bis zu einem oberen Ende hin. Unterhalb des Presskegels 36 ist in der Mittel der Siebbodenfläche 52 ein sich nach oben und unten aus der Ebene der Siebbodenfläche 52 herausragender, koaxial zur Achse 39 verlaufender Rohrabschnitt 55 an die Siebbodenfläche 52 angeformt. Der Rohrabschnitt 55 ist in den folgenden Figuren 3 und 4 näher erläutert. Der Presskegel 36 weist drei gleichmäßig über den Umfang verteilte Tresterfinger 56 auf. Jeder Tresterfinger 56 ist im Bereich des unteren Endabschnitts 57 einer Kegelwand 58 des Presskegels 36 angeformt und ragt in radialer Richtung nach außen von der Kegelwand 58 weg. Der gesamte nach außen ragende Tresterfinger 56 ist schnabel- bzw. löffelartig nach oben gebogen geformt. Eine der Siebfläche 53 zugewandte Seitenfläche 59 des Tresterfingers 56 ist gegenüber der Siebfläche 53 in einem Winkel angestellt. Aufgrund der schnabel- bzw. löffelartigen Form verläuft die Seitenfläche 59 derart, dass im Bereich des radial freien Endabschnitts 60 des Tresterfingers 56 die Seitenfläche 59 einen größeren Abstand zur Siebfläche 53 aufweist, als in einem Bereich des Tresterfingers 56, der in der Nähe eines Wurzelbereiches 61 des Tresterfingers 56 liegt, wo er an die Kegelwand 58 des Presskegels 36 angeformt ist. Im Ausführungsbeispiel ist die Saftpresse für Links- und Rechtslauf ausgebildet, so dass der Tresterfinger 56 an seinen in Umfangsrichtung in Drehrichtung und entgegen der Drehrichtung des Presskegels 36 weisenden Rändern 62 und 63 schnabel- oder löffelartig nach oben gebogen verlaufend ausgebildet ist. Die Ausbildung der Tresterfinger 56 ist auch in Figur 5 deutlich gezeigt.

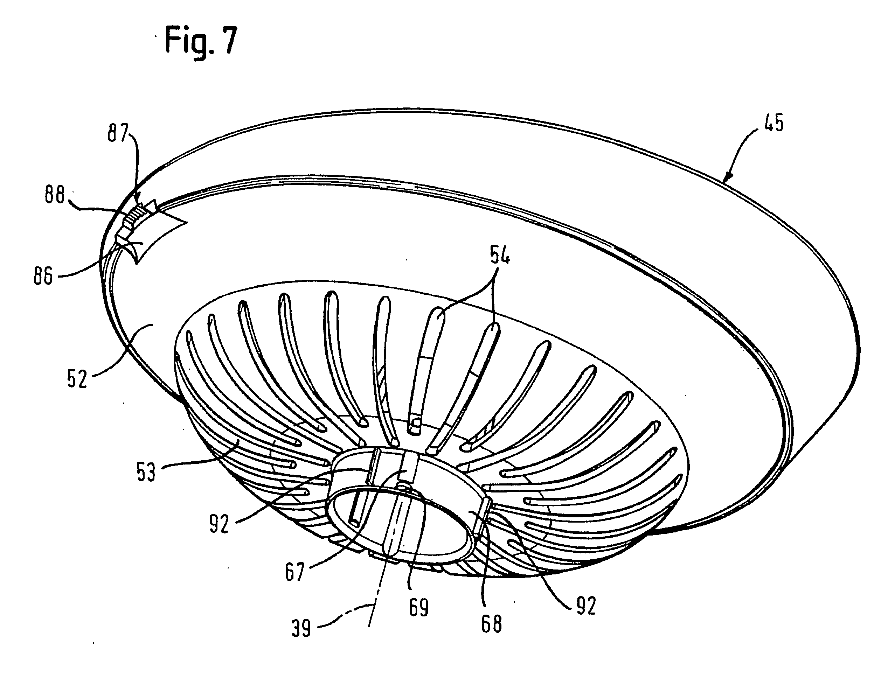

In Figur 3 ist der Presskegel 36 im Schnitt dargestellt und der obere Siebkörper 45 in perspektivischer Ansicht gezeigt. Der obere Siebkörper 45 weist einen saftdurchlässigen Bereich 64 auf, der in einem inneren Bereich der schalenartig gewölbten Siebbodenfläche 52 beginnend sich bis über die radial freien Endabschnitte 60 nach außen hin in der Siebbodenfläche 52 erstrecken. Der saftdurchlässige Bereich 64 der Siebfläche 53 erstreckt sich dadurch über die gesamte der von den Tresterfingern 36 überstrichenen Fläche. Der saftdurchlässige Bereich 64 wird von einer Vielzahl der sich radial in der Siebfläche 53 erstreckenden Schlitzen 54 gebildet. Jeweils jeder zweite Schlitz 54 endet im radialen Zentrum der Siebbodenfläche 52 unterhalb des Presskegels 36 kurz vor Erreichen des Rohrabschnitts 55. Die weiteren Schlitze 54 sind kürzer ausgebildet und enden bereits deutlich vor Erreichen des Rohrabschnitts 55. Sämtliche Schlitze 54 weisen die gleiche Schlitzbreite auf. Der Rohrabschnitt 55 ist koaxial zur Kegelachse 39 angeordnet und erstreckt sich etwa um die halbe Höhe des Presskegels 36 nach oben. Am Rohrabschnitt 55 ist im Vordergrund der Figur 3 ein Gegenrastelement 65 gezeigt. Der Rohrabschnitt 55 trägt insgesamt drei gleichmäßig über den Umfang verteilte Gegenrastelemente 65, die vom Rohrabschnitt 65 ausgehend radial nach außen vorspringen und knopfartig angeformt sind. Unterhalb jedem knopfartigen Gegenrastelement 65 ist eine obere Entformausnehmung 66 am Rohrabschnitt 55 ausgebildet, damit der Siebkörper in einem zweiteiligen Werkzeug im Kunststoffspritzgussverfahren hergestellt werden kann. Die oberen Entformausnehmungen 66 sind nötig, um die Gegenrastelemente 65 entformen zu können, die in einer außerhalb der Trennebene des Spritzgusswerkzeugs liegenden Ebene am Rohrabschnitt 55 angeordnet sind. Der Rohrabschnitt 55 weist am Übergangsbereich zur oberen Siebfläche 53 einen im Durchmesser vergrößerten Abschnitt 68 auf an dem eine zur oberen Entformausnehmung 66 analoge untere Entformausnehmung 67 angeformt ist. Die untere Entformausnehmung 67 ist zur Herstellung von in Figur 7 gezeigten unteren Gegenrastelementen 69 zur Halterung des unteren Siebkörpers 46 vorgesehen. Die oberen Gegenrastelemente 65 halten den Presskegel 36 mittel mindesten eines Rastelements 70, das an einem am Presskegel 36 angeformten Rohrstück 71 ihrerseits radial nach innen ragend angeformt sind. Das mindestens eine Rastelement 70 erstreckt sich in Form eines Ringwulstes 72, wie in Figur 4 gezeigt.

Figur 4 zeigt wie die oberen Gegenrastelemente 65 radial nach außen abstehend an den Rohrabschnitt 55 angeformt sind. In der in Figur 4 gezeigten Position befindet sich der Presskegel 36 in einer am oberen Siebkörper 45 verrasteten Position. In der verrasteten Position kann der Presskegel zwar um seine Kegelachse 39 am oberen Siebkörper 45 sich drehen, er kann jedoch nur mit deutlichem Kraftaufwand in axialer Richtung nach oben von dem oberen Siebkörper 45 abgezogen werden. Dazu befindet sich in der gezeigte, verrasteten Position des Presskegels 36 die Ringwulst 72 axial unterhalb der Gegenrastelemente 65. Die Ringwulst 72 ist am unteren Ende des Rohrstücks 71 radial nach innen ausbauchend angeformt. Die Ringwulst 72 weist eine Vielzahl von Einkerbungen 73 auf, die eine gewisse Elastizität erzeugen, damit der Presskegel mit definiertem Kraftaufwand in axialer Richtung von dem oberen Siebkörper 45 abgezogen werden kann, wenn dies gewünscht ist. In der in Figur 4 gezeigten Schnittansicht des Presskegels 36 sind zwei diametral gegenüberliegende Passierelemente 74 im inneren Hohlraum des Presskegels angeformt. Die Passierelemente 74 erstrecken sich in vertikaler Richtung über die gesamte Höhe des Presskegels 36 und ragen in radialer Richtung zur Kegelachse 39 hin nach innen vor. Eine kurze Stirnkante 75 des Passierelements 74 ist dem saftdurchlässigen Bereich der Siebfläche 53 zugewandt, die sich unter der Grundrissfläche des Presskegels 36 befindet. Die Passierelemente 74 sind insbesondere in Figur 5 deutlicher gezeigt.

In Figur 5 ist die Kegelwand 58 des Presskegels 36 von innen gezeigt. An der Innenseite der Kegelwand 58 sind zwei diametral gegenüberliegende Passierelemente 74 radial nach innen abstehend angeformt. Die Passierelemente erstrecken sich bis zum unteren Ende der Kegelwand 58 und weisen dort die Stirnkanten 75 auf. Die Stirnkanten 75 sind scharfkantig ausgebildet und erstrecken sich radial nach innen bis nahe an den Durchmesser des Rohrstücks 71 heran. Am unteren Ende des Rohrstücks 71 ist die Ringwulst 72 nach innen ragend angeformt. Das Rohrstück 71 weist die mehreren über den Umfang gleichmäßig verteilten Einkerbungen 73 auf, die dazu dienen, die Ringwulst 72 an mehreren Stellen zu unterbrechen, um eine gewisse Elastizität in die Ringwulst zu bringen. Koaxial zum Rohrstück 71 ist innerhalb des Rohrstücks 71 ein Innensechskant 76 am Presskegel 36 angeformt, in den das Sechskantprofil 35 der Werkzeugwelle 24 zur Übertragung eines vom Motor 15 erzeugten Drehmoments auf den Presskegel 36 einsetzbar ist (Figur1).

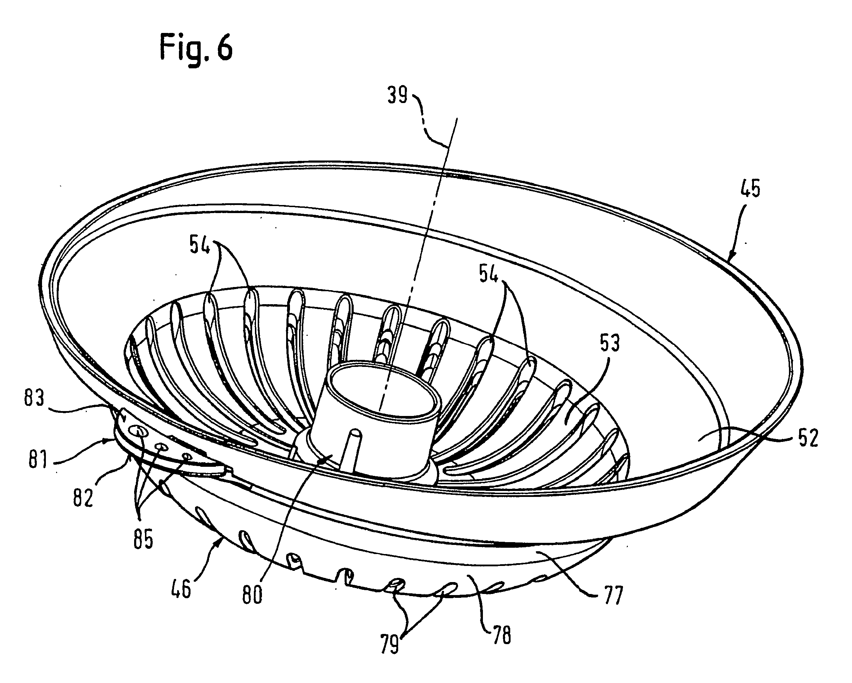

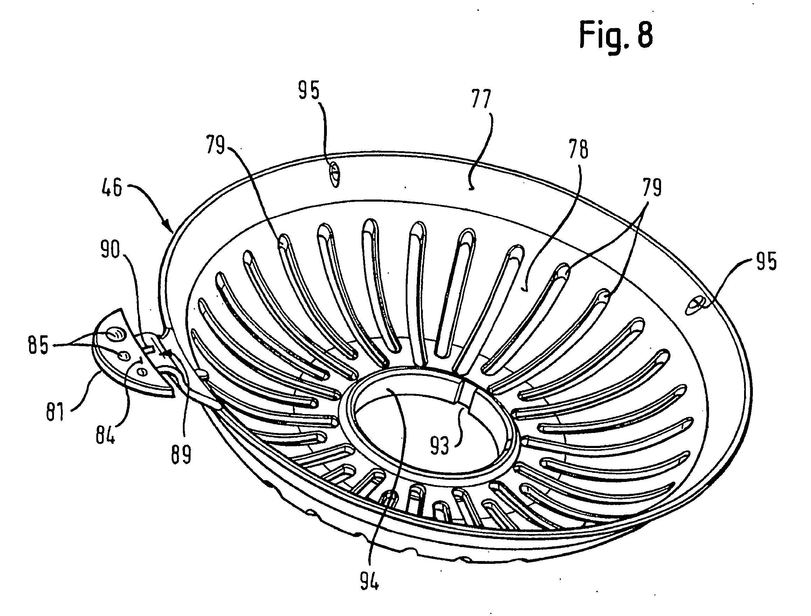

In Figur 6 ist der obere Siebkörper 45 und der untere Siebkörper 46 in zusammengebautem Zustand gezeigt. Analog zum oberen Siebkörper 45 weist auch der untere Siebköper 46 eine Siebbodenfläche 77, eine Siebfläche 78 und darin in radialer Richtung verlaufende Schlitze 79 auf. Die Schlitze 79 sind im unteren Siebkörper 46 derart verlaufend angebracht, dass sie bei deckungsgleicher Lage von unterem Siebkörper 46 und oberem Siebkörper 45 mit den Schlitzen 54 in dem oberen Siebkörper 45 fluchten. Der untere Siebkörper 46 ist mittels eines Drehlagers 80 um die Kegelachse 39 drehbar am oberen Siebkörper 45 gehalten. Die Ausbildung des Drehlagers 80 ist in den Figuren 7 und 8 im Detail dargestellt. Am unteren Siebkörper 46 ist des weiteren ein Griffabschnitt 81 vorgesehen. Der Griffabschnitt 81 ist am äußeren Umfang des unteren Siebkörpers 46 radial nach außen abstehend angeformt. Der Griffabschnitt 81 ist halbkreisförmig ausgebildet und weist eine untere Seitenwand 82 auf, die sich auf dem oberen Rand 44 des Auffangbehälters 37 (Figur 1) abzustützen vermag. Der Griffabschnitt 81 weist des weiteren eine obere Seitenwand 83 auf, die eine Betätigungsfläche 84 bildet. Auf der Betätigungsfläche 84 ist eine Oberflächenstruktur in Form dreier vorspringender linsenartiger Erhebungen 85 aufgebracht. Die drei linsenartigen Erhebungen 84 bilden sowohl eine optische als auch eine haptische Markierung für die Drehrichtung des unteren Siebkörpers 46 bezogen auf den oberen Siebkörper 45. Zur Wirkung als Drehrichtungsmarkierung ist die in Figur 6 links angeordnete Erhebung 84 im Durchmesser und in Höhe am größten ausgebildet, wo hingegen die in Figur 6 rechts dargestellte Erhebung 84 den kleinsten Durchmesser und die kleinste Höhe aufweist. Dazwischen liegend ist eine Erhebung 85 angeordnet, die einen mittleren Durchmesser und eine mittlere Höhe aufweist. Wird das untere Sieb 46 in Richtung der größten Erhebung 85, gemäß Figur 6 also im Uhrzeigersinn bewegt, so fluchten die Schlitze 79 des unteren Siebkörpers 46 mit den Schlitzen 54 im oberen Siebkörper 45, so dass ein größter Öffnungsquerschnitt für durchtretenden Saft geschaffen ist. Wird das untere Sieb in Richtung der kleinsten Erhebung 85, gemäß Figur 6 also entgegen dem Uhrzeigersinn bewegt, so liegen die Schlitze 79 des unteren Siebkörpers 46 weitgehend verschoben zu den Schlitzen 54 im oberen Siebkörper 45, so dass der kleinste Öffnungsquerschnitt für durchtretenden Saft geschaffen ist.

Wie in Figur 7 gezeigt trägt der obere Siebkörper 45 im Bereich des Umfangsrandes der Siebbodenfläche 52 eine Aussparung 86, die ein dem unteren Siebkörper 46 zugewandtes Gegenrastmittel 87 in Form von einer Anzahl von keilförmigen Zähnen ein Zahnprofil 88 bildet. Ein am unteren Siebkörper 46 vorgesehenes zum Gegenrastmittel 87 korrespondierendes, in Figur 8 dargestelltes Rastmittel 89 weist einen Rastzahn 90 auf, der in das Zahnprofil 88 eingreift. Der obere Siebkörper 45 trägt in seinem Zentrum koaxial zur Kegelache39 angeordnet den Rohrabschnitt 55. Der Rohrabschnitt 55 weist am Übergangsbereich zur oberen Siebfläche 53 einen im Durchmesser vergrößerten Abschnitt 68 auf an dem eine zur oberen Entformausnehmung 66 analoge untere Entformausnehmung 67 angeformt ist. Der im Durchmesser vergrößerte Abschnitt 68 bildet einen Tragzapfen 91 für den unteren Siebkörper 46. Die untere Entformausnehmung 67 ist zur Herstellung von den unteren Gegenrastelementen 69 zur Halterung des unteren Siebkörpers 46 am oberen Siebkörper 45 vorgesehen. Um das untere Sieb 46 über einen begrenzten Drehwinkel am oberen Siebkörper 45 zu lagern sind am oberen Siebkörper 45 zwei den Drehwinkel begrenzende radiale Gegenanschlagelemente 92 am Tragzapfen 91 angeformt.

Die radialen Gegenanschlagelemente 92 des oberen Siebkörpers 45 greifen in je ein in Figur 8 näher gezeigtes Anschlagelement 93 am unteren Siebkörper 46 ein. Die Anschlagelemente 93 sind als radial innere Aussparungen eines Ringbundes 94 des unteren Siebkörpers 46 ausgebildet. Die zwei um einen Winkel versetzten stegförmigen Gegenanschlagelemente 92 bildet mit den beiden axialnutartigen Anschlagelementen 93 nicht nur die Winkelbegrenzung für das Verdrehen unterem Siebkörper 46 bezüglich des oberen Siebkörpers 45, sondern bilden gleichzeitig eine Sitzkontrolle, da der untere Siebkörper nur in einer einzigen Winkelposition gegenüber dem oberen Siebkörper 45 an diesem befestigt werden kann. Zur Wahrung eines gleichmäßigen Abstandes von unterem Siebkörper 46 gegenüber dem oberen Siebkörper 45 sind vier gleichmäßig über den Umfang verteilte Abstandshalter 95 an einer dem oberen Siebkörper 45 zugewandten Seitenfläche der unteren Siebbodenfläche 77 angeformt. Die Abstandshalter 95 sind als noppenartige Erhebungen ausgebildet, die sich von der Oberseite der unteren Siebbodenfläche 77 erheben.

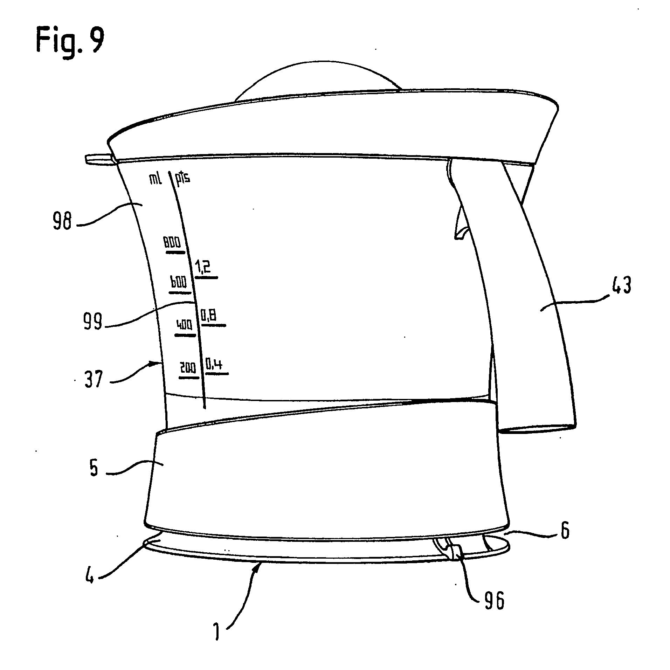

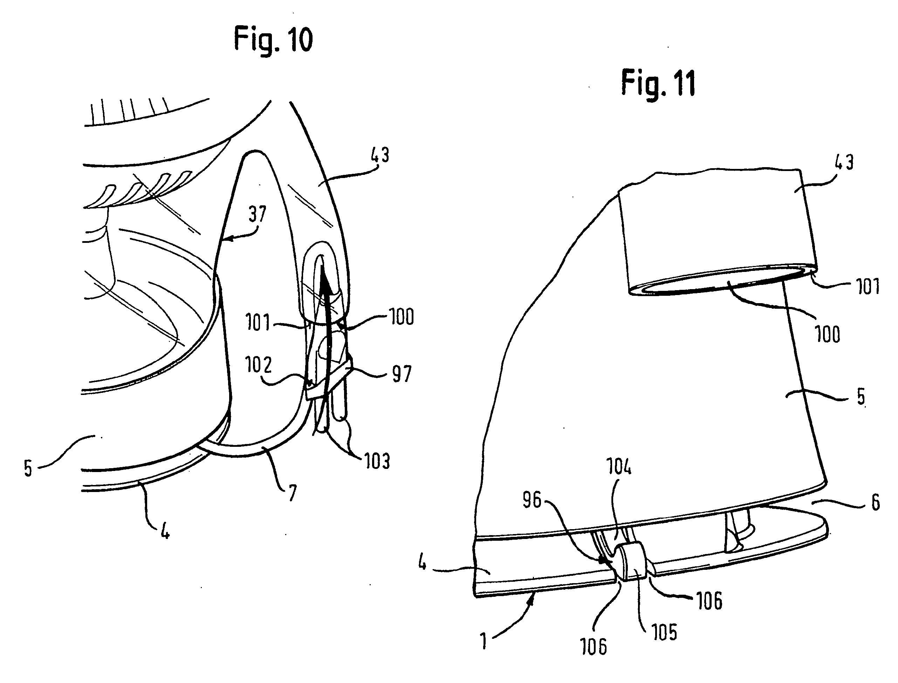

In Figur 9 ist die Saftpresse gemäß Figur 1 in perspektivischer Ansicht von der Seite gezeigt. Der Gehäuseboden 1 ist über den Umfang mit der Schürze 5 umgeben. Oberhalb der Schürze 5 ist der Auffangbehälter 37 aufgesetzt. Der Auffangbehälter 37 weist eine transparente Behälterwand 98 auf, an der eine Hohlmaßskala 99 eingeprägt ist. Am Gehäuseboden 1 ist der umlaufende Tragrand 4 angeformt. Der Tragrand 4 und die Schürze 5 begrenzen die Ringnut 6. In die Ringnut 6 ist das Anschlusskabel 7 aufwickelbar. Um zu Verhindern, dass das Anschlusskabel 7 sich von dem in der Ringnut 6 getragenen Kabelwickel ungewollt löst, ist am Tragrand 4 eine federelastische Rastnase 96 angeformt. Die federelastische Rastnase 96 ist in Figur 11 in einem vergrößerten Ausschnitt gezeigt. Die Funktion des hohlen Griffes 43 als Aufnahme für einen Netzstecker 97 ist in Figur 10 dargestellt.

Figur 10 zeigt wie der Netzstecker 97 in den hohlen Griff 43 in Pfeilrichtung eingesetzt wird. Das elektrische Anschlusskabel 7 wird zu einer Schlaufe gebogen und der Netzstecker 97 rückseitig mit der Schlaufe voraus über eine Öffnung 100 im hohlen Griff 43 eingeführt. Die Querschnittskontur der Öffnung 100 bzw. des hohlen Griffes 43 ist wie in Figur 11 angedeutet der Kontur des Netzstecker 97 angepasst. Der Netzstecker 97 kann in den hohler Griff 43 eingeschoben werden, bis ein als Randabsatz am Netzstecker 97 ausgebildetes Anschlagelement 102 am stirnseitigen Randabschnitt 101 des hohlen Griffes 43 ansteht. In dieser Endposition des Netzsteckers 97 im hohlen Griff 43 stehen zwei elektrische Kontaktstifte 103 weiterhin nach außen vor, so dass der Netzstecker 97 an den zwei elektrischen Kontaktstiften 103 angefasst und aus dem hoheln Griff 43 wieder herausgezogen werden kann.

Die in Figur 11 vergrößert dargestellte federelastische Rastnase 96 ist an den Tragrand 4 direkt angeformt. Die federelastische Rastnase 96 weist einen Stegabschnitt 104 auf, der an seinem einen Ende mit dem Tragrand 4 verbunden ist. An seinem anderen, dem freien Ende weist der Stegabschnitt 104 eine widerhakenartige Verdickung 105 auf, die den freien Spalt der Ringnut 6 verengt. Dazu ragt die Verdickung 105 etwa bis zur Mittel über die Ringnut 6 hinweg. In einem mittleren Bereich ist der Stegabschnitt 104 entsprechend der Form des Tragrandes 4, wie in Figur 1 im Querschnitt gezeigt, rinnenartig gebogen geformt. Die rinnenartig gebogene Form ist dem Querschnitt des elektrischen Anschlusskabels 7 angepasst. Der Stegabschnitt 104 bzw. die Verdickung 105 wird seitlich von zwei Aussparungen 106 begrenzt, die ein freies elastisches Ausweichen der federelastischen Rastnase 96 im Tragrand 4 ermöglichen.

## Patentansprüche

1. Saftpresse insbesondere zum Entsaften von Zitrusfrüchten, mit einem um seine Kegelachse (39) drehbaren Presskegel (36) und einem oberhalb eines Auffangbehälters (37) für ausgepressten Saft angeordneten, dem Presskegel (36) zugeordneten. Siebkörper, der einen saftdurchlässigen Bereich mit veränderlichem Durchlassquerschnitt aufweist, wobei der Siebkörper eine mit ersten Durchlassöffnungen (79) versehene erste Siebfläche (78) aufweist, die gegenüber einer mit zweiten Durchlassöffnungen (54) versehenen zweiten Siebfläche (45) lageveränderlich angeordnet ist und der Durchlassquerschnitt des Siebkörpers durch Änderung der gegenseitigen Lage von erster (78) und zweiter Siebfläche (45) veränderlich ist, **dadurch gekennzeichnet, daß** zur Begrenzung der Anzahl von möglichen relativen Rastpositionen von erster (78) und zweiter Siebfläche (45), an der ersten Siebfläche (78) ein Rastmittel (89) vorgesehen ist, das in ein Gegenrastmittel (87) an der zweiten Siebfläche (45) eingreift.

2. Saftpresse nach Anspruch 1, **dadurch gekennzeichnet, dass** die Rastmittel (89) /Gegenrastmittel (87)-Verbindung durch einen in ein Zahnprofil (88) eingreifenden Rastzahn (90) gebildet wird.

3. Saftpresse nach einem der Ansprüche 1 oder 2, **dadurch gekennzeichnet, dass** die erste Siebfläche (78) einen Griffabschnitt (81) zur Änderung ihrer Lage gegenüber der zweiten Siebfläche (45) aufweist.

4. Saftpresse nach Anspruch 3, **dadurch gekennzeichnet, dass** der Griffabschnitt (81) eine Seitenwand (82) aufweist, die sich an einem Rand (44) des Auffangbehälters (37) abstützt.

5. Saftpresse nach Anspruch 3 oder 4, **dadurch gekennzeichnet, dass** der Griffabschnitt (81) eine Betätigungsfläche (83) aufweist, die zur Erhöhung der Rutschfestigkeit eine Oberflächenstruktur aufweist.

6. Saftpresse nach einem der Ansprüche 3 bis 5, **dadurch gekennzeichnet, dass** der Griffabschnitt (81) eine optische und/oder haptische Drehrichtungsmarkierung (85) aufweist.

7. Saftpresse nach Anspruch 1, **dadurch gekennzeichnet, dass** die erste Siebfläche (78) gegenüber der zweiten Siebfläche (45) verdrehbar, insbesondere um die Kegelachse (39) des Presskegels (36) verdrehbar gelagert ist.

8. Saftpresse nach Anspruch 7, **dadurch gekennzeichnet, dass** die erste Siebfläche (78) mittels eines Drehlagers an der zweiten Siebfläche (45) gelagert ist.

9. Saftpresse nach Anspruch 8, **dadurch gekennzeichnet, dass** das Drehlager einen an der ersten Siebfläche (78) vorgesehenen Ringbund (94) aufweist, der an einem zylindrischen, an der zweiten Siebfläche (45) vorgesehenen Tragzapfen (68) gehalten ist.

10. Saftpresse nach Anspruch 9, **dadurch gekennzeichnet, dass** der Tragzapfen (68) zur axialen Sicherung der ersten Siebfläche (78) an der zweiten Siebfläche (45) mindestens einen radialen Vorsprung (69) aufweist.

11. Saftpresse nach einem der Ansprüche 7 bis 10, **dadurch gekennzeichnet, dass** die zweite Siebfläche (45) mindestens ein Anschlagelement (92) aufweist, das zur Begrenzung der Änderung der gegenseitigen Lage von erster (78) und zweiter Siebfläche (45) zwischen zwei an der ersten Siebfläche (78) vorgesehenen Gegenanschlagelementen (93) beweglich ist.

## Claims

1. Juice extractor particularly for juice extraction from citrus fruits, with a press cone (36) rotatable about its cone axis (39) and a sieve body, which is arranged above a collecting container (37) for pressed-out juice and is associated with the press cone (36) and which has a juice-permeable region with variable passage cross-section, wherein the sieve body has a first sieve surface (78), which is provided with first passage openings (79) and is arranged to be variable in position relative to a second sieve surface (45) provided with second passage openings (54), and the passage cross-section of the sieve body is variable by changing the relative position of first sieve surface (78) and second sieve surface (45), **characterised in that** a detent means (89) engaged in a counter-detent means (87) at the second sieve surface (45) is provided at the first sieve surface (78) for limitation of the number of possible relative detent positions of first sieve surface (78) and second sieve surface (45).

2. Juice extractor according to claim 1, **characterised in that** the connection of detent means (89) and counter-detent means (87) is formed by a detent tooth (90) engaging in a toothed profile (88).

3. Juice extractor according to one of claims 1 and 2, **characterised in that** the first sieve surface (78) has a grip section (81) for changing its position relative to the second sieve surface (45).

4. Juice extractor according to claim 3, **characterised in that** the grip section (81) has a side wall (82) supported at an edge (44) of the collecting container (37).

5. Juice extractor according to claim 3 or 4, **characterised in that** the grip section (81) has an actuating surface (83) having a surface structure for increasing slip resistance.

6. Juice extractor according to any one of claims 3 to 5, **characterised in that** grip section (81) has an optical and/or haptic rotational direction marking (85).

7. Juice extractor according to claim 1, **characterised in that** the first sieve surface (78) is rotatable relative to the second sieve surface (45), in particular is mounted to be rotatable about the cone axis (39) of the press cone (36).

8. Juice extractor according to claim 7, **characterised in that** the first sieve surface (78) is mounted on the second sieve surface (45) by means of a rotary bearing.

9. Juice extractor according to claim 8, **characterised in that** the rotary bearing comprises an annular collar (94), which is provided at the first sieve surface (78) and which is retained at a cylindrical support pin (68) provided at the second sieve surface (45).

10. Juice extractor according to claim 9, **characterised in that** the support pin (68) has at least one radial projection (69) for axial securing of the first sieve surface (78) to the second sieve surface (45).

11. Juice extractor according to any one of claims 7 to 10, **characterised in that** the second sieve surface (45) has at least one abutment element (92) which is movable between two counter-abutment elements (93), which are provided at the first sieve surface (78), for limiting the change in relative position of first sieve surface (78) and second sieve surface (45).

## Revendications

1. Presse-fruits, notamment permettant d'extraire le jus d'agrumes, comprenant un cône de pressage (36) pouvant tourner autour de son axe de cône (39) et un corps filtrant disposé au-dessus d'un récipient collecteur (37) pour le jus pressé et associé au cône de pressage (36), ce corps filtrant présentant une zone perméable au jus, de section de passage variable, le corps filtrant présentant une surface filtrante (78) munie de premiers orifices de passage (79), qui est disposée de manière variable en position par rapport à une seconde surface filtrante (45) munie de seconds orifices de passage (54), et la section de passage du corps filtrant étant variable par modification de la position mutuelle de la première surface filtrante (78) et de la seconde surface filtrante (45), **caractérisé en ce que**, pour limiter le nombre de positions d'enclenchement relatives possibles de la première surface filtrante (78) et de la seconde surface filtrante (45), un moyen d'enclenchement (89), qui a prise dans un moyen de contre-enclenchement (87) sur la seconde surface filtrante (45), est ménagé sur la première surface filtrante (78).

2. Presse-fruits selon la revendication 1, **caractérisé en ce que** la liaison moyen d'enclenchement (89)/ moyen de contre-enclenchement (87) est formée par une dent d'arrêt (90) ayant prise dans un profilé denté (88).

3. Presse-fruits selon l'une quelconque des revendications 1 ou 2, **caractérisé en ce que** la première surface filtrante (78) présente une section de préhension (81) permettant de modifier sa position par rapport à la seconde surface filtrante (45).

4. Presse-fruits selon la revendication 3, **caractérisé en ce que** la section de préhension (81) présente une paroi latérale (82) qui s'appuie sur un bord (44) du réservoir collecteur (37).

5. Presse-fruits selon la revendication 3 ou 4, **caractérisé en ce que** la section de préhension (81) présente une surface de commande (83) qui présente une structure de surface pour augmenter la résistance au glissement.

6. Presse-fruits selon l'une quelconque des revendications 3 à 5, **caractérisé en ce que** la section de préhension (81) présente un marquage (85) optique et/ou haptique du sens de rotation.

7. Presse-fruits selon la revendication 1, **caractérisé en ce que** la première surface filtrante (78) est logée de manière à pouvoir être tournée par rapport à la seconde surface filtrante (45), notamment de manière à pouvoir être tournée autour de l'axe de cône (39) du cône de pressage (36).

8. Presse-fruits selon la revendication 7, **caractérisé en ce que** la première surface filtrante (78) est logée sur la seconde surface filtrante (45) au moyen d'un coussinet de pivotement.

9. Presse-fruits selon la revendication 8, **caractérisé en ce que** le coussinet de pivotement présente un collet annulaire (94) ménagé sur la première surface filtrante (78), qui est maintenu sur un tourillon porteur (68) cylindrique ménagé sur la seconde surface filtrante (45).

10. Presse-fruits selon la revendication 9, **caractérisé en ce que** le tourillon porteur (68) présente au moins une saillie radiale (69) pour le blocage axial de la première surface filtrante (78) sur la seconde surface filtrante (45).

11. Presse-fruits selon l'une quelconque des revendications 7 à 10, **caractérisé en ce que** la seconde surface filtrante (45) présente au moins un élément de butée (92) qui est déplaçable entre deux éléments de contrebutée (93) ménagés sur la première surface filtrante (78) pour limiter la modification de la position mutuelle de la première surface filtrante (78) et de la seconde surface filtrante (45).
